# EUROPEAN PATENT SPECIFICATION

(11) **EP 4 465 166 B1**
(45) Date of publication and mention of the grant of the patent: **22.07.2026**
(21) Application number: 22934093.0
(22) Date of filing: 30.03.2022
(51) Int. Cl.: G06F 9/50, G06F 8/20, G06F 8/30, G06F 8/34, G06F 9/445, G05B 19/042, G06F 9/54

(54) **MICROSERVICE ORCHESTRATION METHOD AND APPARATUS, ELECTRONIC DEVICE, AND READABLE MEDIUM**
MIKRODIENSTORCHESTRIERUNGSVERFAHREN UND -VORRICHTUNG, ELEKTRONISCHE VORRICHTUNG UND LESBARES MEDIUM
PROCÉDÉ ET APPAREIL D'ORCHESTRATION DE MICROSERVICES, DISPOSITIF ÉLECTRONIQUE ET SUPPORT LISIBLE

(43) Date of publication of application: 20.11.2024
(73) Proprietor: Siemens Aktiengesellschaft, 80333 München (DE)
(72) Inventor: XIAO, Hang, Qingdao, Shandong 266031 (CN); LIN, Jian, Chengdu, Sichuan 610000 (CN); WANG, Bowen, Jining, Shandong 272075 (CN)
(74) Representative: Isarpatent
(86) International application number: PCT/CN2022/084087
(87) International publication number: WO 2023/184241

(56) References cited:
- CN-A- 108 762 769
- CN-A- 108 762 769
- CN-A- 110 825 356
- CN-A- 112 181 367
- CN-A- 112 394 701
- US-A1- 2018 234 523
- US-A1- 2021 160 373
- US-B1- 10 044 522
- LI ZIJUN ET AL: "FaaSFlow: enable efficient workflow execution for function-as-a-service", PROCEEDINGS OF THE 2023 CHI CONFERENCE ON HUMAN FACTORS IN COMPUTING SYSTEMS, ACMPUB27, NEW YORK, NY, USA, 28 February 2022 (2022-02-28), pages 782 - 796, XP059540380, ISBN: 978-1-4503-9421-5, DOI: 10.1145/3503222.3507717
- GHZOULI RAZAN RAZAN GHZOULI@CHALMERS SE ET AL: "Behavior trees in action: a study of robotics applications", PROCEEDINGS OF THE 23RD ACM/IEEE INTERNATIONAL CONFERENCE ON MODEL DRIVEN ENGINEERING LANGUAGES AND SYSTEMS: COMPANION PROCEEDINGS, ACMPUB27, NEW YORK, NY, USA, 16 November 2020 (2020-11-16), pages 196 - 209, XP058742327, ISBN: 978-1-4503-8194-9, DOI: 10.1145/3426425.3426942

## Description

### TECHNICAL FIELD

Embodiments of this application mainly relate to the field of data processing technologies, and in particular, to a microservice orchestration method and apparatus, an electronic device, and a readable medium.

### BACKGROUND

A microservice is an architecture and an organization method for developing software, and the software is composed of small independent services that communicate through a well-defined application programming interface (API). The microservice is a widely used architecture nowadays. As microservices increase, it is increasingly difficult to orchestrate the microservices. Currently, microservices are orchestrated in a fixed order, and run a corresponding workflow is run in a service chain. However, if a service needs to be modified or a new service needs to be introduced into the service chain in the above manner, the related development and deployment will be very cumbersome and complex.

Li Zijun et al., "FaaSFlow: enable efficient workflow execution for function-as-a-service", 2022, discloses a workflow system for Function-as-a-Service (FaaS) platforms.

### SUMMARY

Embodiments of this application mainly provide a microservice orchestration method and apparatus, an electronic device, and a readable medium, to flexibly orchestrate different microservices.

A first aspect provides a microservice orchestration method, including: establishing, for each of a plurality of microservices, a first node in a first runtime, where the first node is configured to control execution of the microservice; receiving construction performed by a user on a behavior tree, where the behavior tree includes a leaf node, and the leaf node represents the microservice; parsing the behavior tree, where the leaf node is mapped to the first node; and generating an instance of the behavior tree, as defined in claim 1.

A second aspect provides an electronic device, including: at least one memory, configured to store computer readable code; and at least one processor, configured to call the computer readable code to perform the steps of the method provided in the first aspect.

A third aspect provides a computer readable medium, the computer readable medium stores computer readable instructions. The computer readable instructions, when executed by a processor, cause the processor to perform the steps of the method provided in the first aspect.

### BRIEF DESCRIPTION OF THE DRAWINGS

The following drawings are merely intended to give schematic illustrations and explanations of embodiments of this application, and are not intended to limit the scope of the embodiments of this application. In the drawings:
FIG. 1 is a flowchart of a microservice orchestration method according to an embodiment of this application;
FIG. 2 is a schematic diagram of the microservice orchestration method according to an embodiment of this application;
FIG. 3 is a schematic diagram of another microservice orchestration method according to an embodiment of the present application;
FIG. 4 is a schematic diagram of an electronic device according to an embodiment of this application; and
FIG. 5 is a schematic diagram of a microservice orchestration apparatus according to an embodiment of this application.

### Reference Numerals:

100: Microservice orchestration method 101-104: Step of method
400: Electronic device 401: Processor 402: Memory
50: Microservice orchestration apparatus 51: Establishment module 52: Receiving module
53: Parsing module 54: Instantiation module

### DETAILED DESCRIPTION

A subject described in this specification is discussed now with reference to exemplary implementations. It should be understood that discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the embodiments of this application. Various processes or components may be omitted, replaced, or added in each example according to requirements. For example, the described method may be performed according to a sequence different from the sequence described herein, and steps may be added, omitted, or combined. In addition, features described in some examples may be combined in other examples.

As used in this specification, the term "include" and variants thereof represent open terms, and mean "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The embodiments of this application are described below with reference to the drawings.

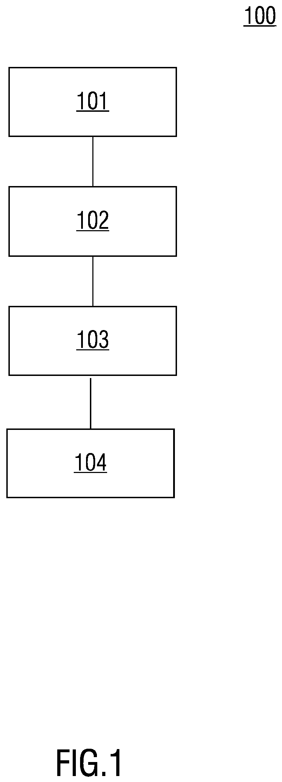

FIG. 1 is a flowchart of a microservice orchestration method according to an embodiment of this application. As shown in FIG. 1, the microservice orchestration method 100 includes the following steps:
Step 101: Establish, for each of a plurality of microservices, a first node in a first runtime, where the first node is configured to control execution of the microservice.

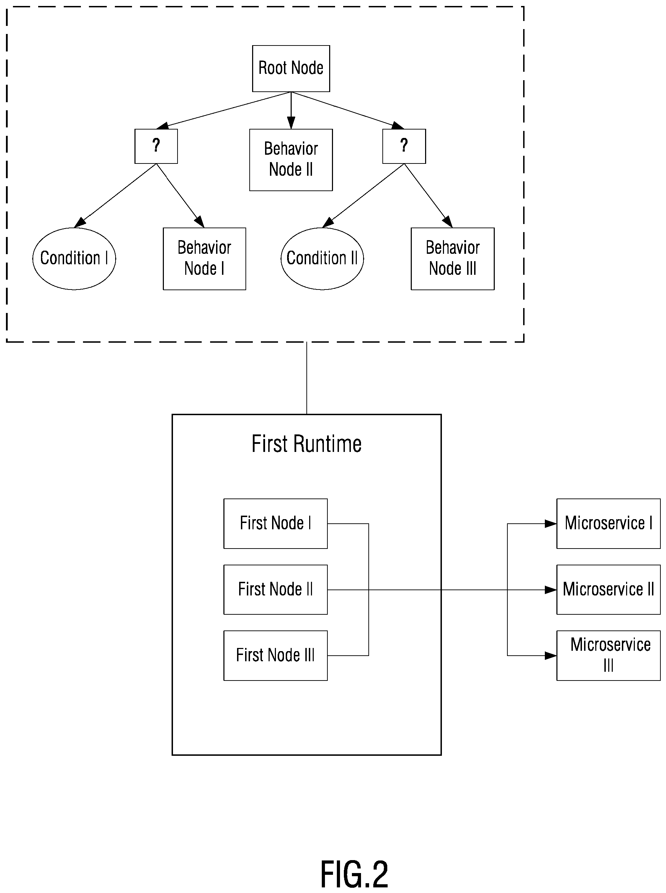

The first node communicates with the corresponding microservice through a RESTful application programming interface (API) or a remote procedure call (RPC) API. Optionally, as shown in FIG. 2, a first node I, a first node II, and a first node III in the first runtime are respectively configured to control execution of corresponding microservices. The first node I controls execution of a microservice I, the first node II controls execution of a microservice II, and the first node III controls execution of a microservice III.

Step 102: Receive construction performed by a user on a behavior tree, where the behavior tree includes a first leaf node, and the first leaf node represents the corresponding microservice. The first leaf node is a behavior node.

The behavior tree is a formalized graphical modeling language, which explicitly represents hundreds of or even thousands of natural language requirements through well-defined symbols. The requirements are usually used to express demands of users of large-scale software integration systems. An execution order of each node is usually defined in the behavior tree. As shown in FIG. 2, a user may create a corresponding behavior tree according to a demand for an actual control logic. The first leaf node includes a name or an identifier of a function of a corresponding microservice. Optionally, a plurality of leaf nodes may be created in the behavior tree according to specific requirements, which correspond to different functions of the same microservice or correspond to different microservices. Optionally, when a configuration operation performed by the user on the first leaf node is received, or according to a preset configuration operation of a system, where the configuration includes relevant parameters during execution of the corresponding microservice, the execution of the corresponding microservice may be controlled through the corresponding first node according to the specific configuration when the first leaf node is ticked. In an embodiment, it is assumed that a function of a microservice is to grab a component A. According to a call rule defined for the microservice, which specifically includes a type and a parameter of an acceptable request message, such as a grab strength, a movement speed, and a movement position, the user inputs a specific configuration requirement in the corresponding leaf node. When the first leaf node is ticked, the corresponding first node establishes corresponding request information. The request information includes the parameters for the microservice to grab the component A after receiving the corresponding request information. In an embodiment, for example, in the field of industrial control, a related operational technology (OT) device connected in the first runtime may be controlled to perform a specific operation in response to the configuration operation performed by the user. In an embodiment, the microservice includes a runtime. The corresponding OT device may be directly controlled through the runtime in the microservice to perform specific operation in response to the configuration operation performed by the user.

Step 103: Parse the behavior tree, where the first leaf node is mapped to the first node.

Specifically, a control logic in the behavior tree may be transmitted to the first runtime to parse the control logic in the behavior tree. Optionally, a destination address of the first leaf node, that is, an address and configuration information of a target device, may be mapped to the first node in the first runtime according to a name or an identifier of a function of the corresponding microservice included in the leaf node.

Step 104: Generate an instance of the behavior tree.

The behavior tree may be instantiated through the first runtime. The first runtime is configured to deploy the control logic in the behavior tree. Optionally, the first runtime deploys control logic of a related leaf node to a corresponding target device according to a destination address of the related leaf node in the behavior tree.

In this embodiment of this application, corresponding nodes are established to control the execution of different microservices, and then the established nodes are mapped to the corresponding leaf nodes in the behavior tree, so that the definition of the control logic in the behavior tree is fully used to orchestrate the different microservices. A coupling degree between different microservices is significantly reduced, and a logical coupling relationship is decoupled to the behavior tree. Since logic processing of the behavior tree conforms to a tick algorithm thereof, a business coupling degree between a product designer and a developer is significantly reduced. During construction of a new service, the product designer realizes maximum re-orchestration of microservices by constructing different behavior trees, which does not require secondary development of the microservices. Rapid development and deployment of the new service can be realized through only visual definition and construction of the behavior tree. The product developer only needs to develop rich related nodes such as code blocks or classes according to interfaces of microservices, without a need to pay attention to a specific service coupling logic. During service upgrade, if no new microservice and an API change or a new API introduction are involved, the product designer only needs to upgrade a logic of a behavior tree. If only optimization of the microservice is involved and no API change is involved, just single-point upgrading needs to be performed on the corresponding microservice. If the API change is involved, the microservices and orchestration policies may be upgraded separately. Therefore, labor costs can be significantly reduced through the embodiments of this application.

In an embodiment, an operating interface is provided, in which the user may create and update a corresponding behavior tree. During execution of a workflow, a node of a behavior tree currently in execution is displayed on the operating interface in a preset annotation manner, so that the user can learn an execution progress and an execution status.

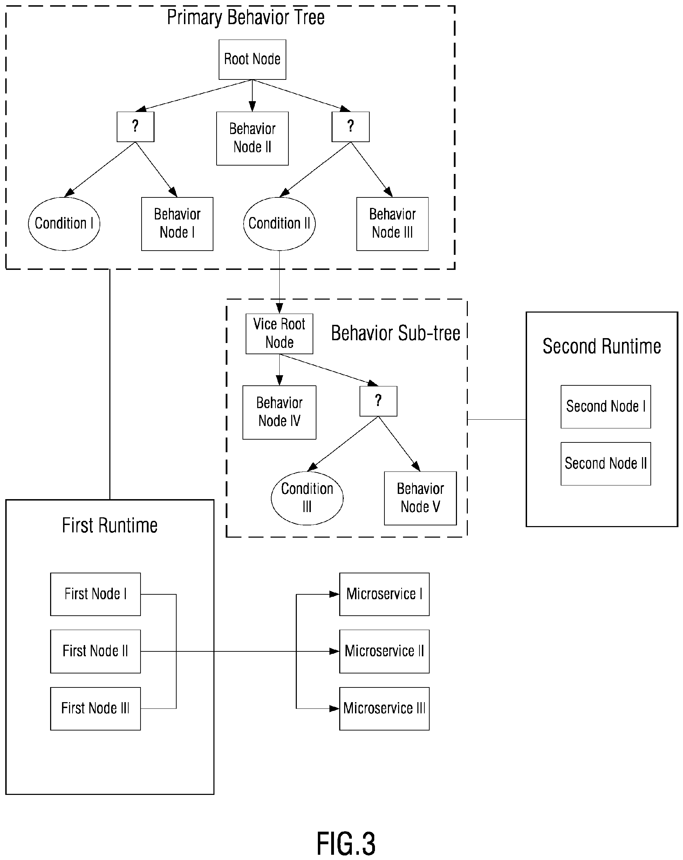

In an embodiment, before the instance of the behavior tree is generated, as shown in FIG. 3, FIG. 3 is a schematic diagram of another microservice orchestration method, in which at least one behavior sub-tree may be connected to a primary behavior tree. Distributed deployment is performed on a second runtime connected to the at least one behavior sub-tree and the first runtime connected to the primary behavior tree. The first runtime is connected to the second runtime so that the first runtime controls execution of the second runtime. A corresponding second node is established in the second runtime for each of all behavior nodes in a behavior sub-tree of the at least one behavior sub-tree. The behavior node defines an operation of an OT device, so that a corresponding OT device is controlled by the second node when the behavior node in the behavior sub-tree is ticked. Optionally, communication between the primary behavior tree and the behavior sub-tree may be established through an RPC standard.

In an embodiment, in a scenario of monitoring objects on a conveyor belt, a first behavior sub-tree for image recognition may be caused to communicate with a runtime installed in a computing device A, to control a related OT device to complete an image recognition operation. a second behavior sub-tree for object detection is caused to communicate with a runtime installed in a computing device B, to control a related OT device to complete object detection.

Optionally, at least one second node may be connected to a microservice in the second runtime, so that the second node controls execution of the microservice. That is to say, the microservice may be called in either the primary behavior tree or the behavior sub-tree.

Optionally, a leaf node may be determined from the primary behavior tree, where the leaf node is configured to control execution of a behavior sub-tree. A root node of each of the at least one behavior sub-tree to a corresponding leaf node in the primary behavior tree. The root node of each of the at least one behavior sub-tree may be caused to communicate with the corresponding leaf node in the primary behavior tree through the RESTful API or the RPC API.

With the advent of the open distributed industrial control system, increasing complex control logics are divided into different functional blocks, which are deployed on the distributed system and communicate with an IP network technology. This embodiment of this application accords with the current distributed development. Since the behavior sub-trees are connected to the primary behavior tree, and are respectively connected to different runtimes in the distributed deployment, the existing software does not need to be developed completely, and only a newly added behavior tree design part needs to be deployed. In this embodiment of this application, program designing is separated from development. When a new behavior sub-tree needs to be added to the original behavior tree, the new behavior sub-tree is deployed to a runtime, without a need to stop running of any other original programs. Either reconfiguring or reconstructing the control logic is more efficient and flexible, which saves huge capital and human resources. In addition, the distributed deployment also reduces a requirement for a computing capability of a device. The user may deploy a control logic with a high timeliness requirement on a site, and deploy a control logic with a low timeliness requirement on a cloud.

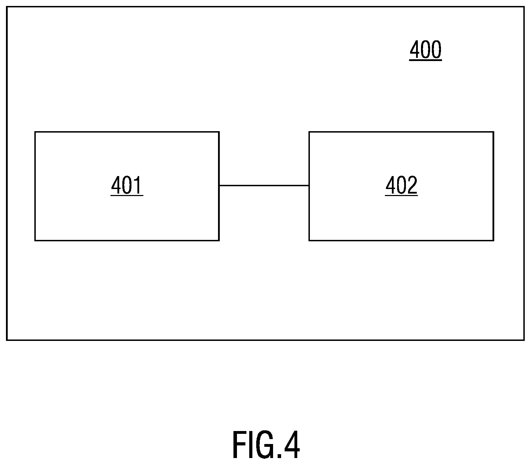

An embodiment of this application further provides an electronic device 400. FIG. 4 is a schematic diagram of an electronic device 400 according to an embodiment of this application. As shown in FIG. 4, the electronic device 400 includes a processor 401 and a memory 402. The memory 402 stores instructions. The instructions, when executed by the processor 401, implement the method 100 described above. The at least one processor 401 may include a microprocessor, an application specific integrated circuit (ASIC), a digital signal processor (DSP), a central processing unit (CPU), a graphics processing unit (GPU), a state machine, and the like. An embodiment of the computer-readable medium includes, but is not limited to, a floppy disk, a CD ROM, a disk, a memory chip, a ROM, a RAM, an ASIC, a configured processor, an all-optical medium, all tapes or other magnetic media, or any other media from which a computer processor can read instructions. In addition, various other forms of computer-readable media may transmit or carry instructions to a computer, which includes a router, a private or public network, or other wired and wireless transmission devices or channels. The instructions may include code from any computer programming language, including C, C++, C language, Visual Basic, java, and JavaScript.

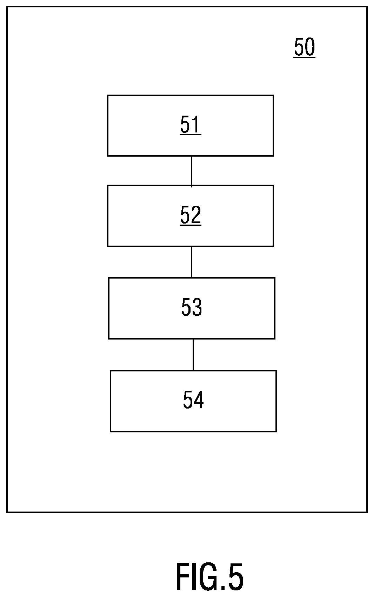

FIG. 5 is a schematic diagram of a microservice orchestration apparatus 50 according to an embodiment of this application. As shown in FIG. 5, the microservice orchestration apparatus 50 includes:
an establishment module 51, configured to establish, for each of a plurality of microservices, a first node in a first runtime, where the first node is configured to control execution of the microservice;
a receiving module 52, configured to receive construction performed by a user on a behavior tree, where the behavior tree includes a leaf node, and the leaf node represents the corresponding microservice;
a parsing module 53, configured to parse the behavior tree, where the leaf node is mapped to the first node; and
an instantiation module 54, configured to generate an instance of the behavior tree.

In addition, an embodiment of this application further provides a computer-readable medium, the computer-readable medium stores computer-readable instructions. The computer-readable instructions, when executed by a processor, cause the processor to perform the above microservice orchestration method. An embodiment of the computer-readable medium includes a floppy disk, a hard disk, a magneto-optical disk, an optical disk (such as a CD-ROM, a CD-R, a CD-RW, a DVD-ROM, a DVD-RAM, a DVD-RW, or a DVD+RW), a magnetic tape, a non-volatile memory card, and a ROM. Optionally, the computer readable instructions may be downloaded from a server computer or a cloud through a communication network.

## Claims

1. A microservice orchestration method, comprising:
establishing (101), for each of a plurality of microservices, a first node in a first runtime, wherein the first node is configured to control execution of a microservice;
receiving (102) a behavior tree whose construction has been performed by a user, wherein the behavior tree comprises a leaf node, and the leaf node comprises a name or an identifier of the microservice;
parsing (103) the behavior tree and mapping the leaf node to the first node; and
generating (104) an instance of the behavior tree through the first runtime which is configured to deploy control logic in the behavior tree to a target device;
wherein before the generating (104) an instance of the behavior tree, the method further comprises:
connecting at least one behavior sub-tree to the behavior tree;
performing distributed deployment on a second runtime connected to the at least one behavior sub-tree and the first runtime connected to the behavior tree;
connecting the first runtime to the second runtime so that the first runtime controls execution of the second runtime; and
establishing, for each of all behavior nodes in a behavior sub-tree of the at least one behavior sub-tree, a corresponding second node in the second runtime, wherein the behavior node defines an operation of an operational technology, OT, device, so that a corresponding OT device is controlled through the second node when the behavior node in the behavior sub-tree is ticked.

2. The method according to claim 1, wherein the first node communicates with the corresponding microservice through a RESTful application programming interface, API, or a remote procedure call, RPC, API.

3. The method according to claim 1, wherein after the receiving (102) construction performed by a user on a behavior tree, the method further comprises:
configuring the leaf node so that the execution of the corresponding microservice is controlled through the first node according to the configuration when the leaf node is ticked.

4. The method according to claim 1, wherein after the establishing a corresponding second node in the second runtime, the method further comprises:
connecting at least one second node to the microservice in the second runtime, so that the second node controls execution of the microservice.

5. The method according to claim 1, wherein the connecting at least one behavior sub-tree to the behavior tree comprises:
determining a leaf node from the behavior tree, wherein the leaf node is configured to control execution of a behavior sub-tree; and
connecting a root node of each of the at least one behavior sub-tree to a corresponding leaf node in the behavior tree.

6. The method according to claim 5, wherein the connecting a root node of each of the at least one behavior sub-tree to a corresponding leaf node in the behavior tree comprises:
causing the root node of each of the at least one behavior sub-tree to communicate with the corresponding leaf node in the behavior tree through a RESTful API or an RPC API.

7. A microservice orchestration electronic device, comprising a processor (401) and a memory (402), wherein the memory (402) stores computer-readable instructions, and the computer-readable instructions, when executed by the processor (401), implement the method according to any of claims 1 to 6.

8. A computer-readable storage medium, storing computer-readable instructions, wherein the computer-readable instructions, when being executed, perform the method according to any of claims 1 to 6.

## Patentansprüche

1. Mikrodienst-Orchestrierungsverfahren, das Folgendes umfasst:
Einrichten (101), für jeden von mehreren Mikrodiensten, eines ersten Knotens in einer ersten Laufzeit, wobei der erste Knoten dazu ausgelegt ist, die Ausführung eines Mikrodienstes zu steuern;
Empfangen (102) eines Verhaltensbaums, dessen Konstruktion durch einen Benutzer durchgeführt wurde, wobei der Verhaltensbaum einen Blattknoten umfasst und der Blattknoten einen Namen oder eine Kennung des Mikrodienstes umfasst;
Parsen (103) des Verhaltensbaums und Abbilden des Blattknotens auf den ersten Knoten; und
Erzeugen (104) einer Instanz des Verhaltensbaums durch die erste Laufzeit, die dazu ausgelegt ist, Steuerlogik in dem Verhaltensbaum für eine Zielvorrichtung bereitzustellen;
wobei das Verfahren vor dem Erzeugen (104) einer Instanz des Verhaltensbaums ferner Folgendes umfasst:
Verbinden mindestens eines Verhaltensteilbaums mit dem Verhaltensbaum;
Durchführen eines verteilten Einsatzes auf einer zweiten Laufzeit, die mit dem mindestens einen Verhaltensteilbaum verbunden ist, und der ersten Laufzeit, die mit dem Verhaltensbaum verbunden ist;
Verbinden der ersten Laufzeit mit der zweiten Laufzeit, so dass die erste Laufzeit die Ausführung der zweiten Laufzeit steuert; und
Erstellen, für jeden aller Verhaltensknoten in einem Verhaltensteilbaum des mindestens einen Verhaltensteilbaums, eines entsprechenden zweiten Knotens in der zweiten Laufzeit, wobei der Verhaltensknoten einen Betrieb einer Betriebstechnologie- bzw. OT-Vorrichtung definiert, so dass eine entsprechende OT-Vorrichtung durch den zweiten Knoten gesteuert wird, wenn der Verhaltensknoten in dem Verhaltensteilbaum ausgewählt ist.

2. Verfahren nach Anspruch 1, wobei der erste Knoten mit dem entsprechenden Mikrodienst über eine RESTful-Anwendungsprogrammierschnittstelle, API, oder eine Prozedurfernaufruf- bzw. RPC-API kommuniziert.

3. Verfahren nach Anspruch 1, wobei das Verfahren nach dem Empfangen (102) der Konstruktion, die durch einen Benutzer an einem Verhaltensbaum durchgeführt wird, ferner Folgendes umfasst:
Konfigurieren des Blattknotens, so dass die Ausführung des entsprechenden Mikrodienstes durch den ersten Knoten gemäß der Konfiguration gesteuert wird, wenn der Blattknoten ausgewählt ist.

4. Verfahren nach Anspruch 1, wobei das Verfahren nach dem Einrichten eines entsprechenden zweiten Knotens in der zweiten Laufzeit ferner Folgendes umfasst:
Verbinden mindestens eines zweiten Knotens mit dem Mikrodienst in der zweiten Laufzeit, so dass der zweite Knoten die Ausführung des Mikrodienstes steuert.

5. Verfahren nach Anspruch 1, wobei das Verbinden mindestens eines Verhaltensteilbaums mit dem Verhaltensbaum Folgendes umfasst:
Bestimmen eines Blattknotens aus dem Verhaltensbaum, wobei der Blattknoten dazu ausgelegt ist, die Ausführung eines Verhaltensteilbaums zu steuern; und
Verbinden eines Wurzelknotens jedes des mindestens einen Verhaltensteilbaums mit einem entsprechenden Blattknoten in dem Verhaltensbaum.

6. Verfahren nach Anspruch 5, wobei das Verbinden eines Wurzelknotens jedes des mindestens einen Verhaltensteilbaums mit einem entsprechenden Blattknoten in dem Verhaltensbaum Folgendes umfasst:
Veranlassen, dass der Wurzelknoten jedes des mindestens einen Verhaltensteilbaums mit dem entsprechenden Blattknoten in dem Verhaltensbaum über eine RESTful-API oder eine RPC-API kommuniziert.

7. Elektronische Mikrodienst-Orchestrierungsvorrichtung, die einen Prozessor (401) und einen Speicher (402) umfasst, wobei der Speicher (402) computerlesbare Anweisungen speichert und die computerlesbaren Anweisungen, wenn sie durch den Prozessor (401) ausgeführt werden, das Verfahren nach einem der Ansprüche 1 bis 6 implementieren.

8. Computerlesbares Speichermedium, das computerlesbare Anweisungen speichert, wobei die computerlesbaren Anweisungen bei Ausführung das Verfahren nach einem der Ansprüche 1 bis 6 durchführen.

## Revendications

1. Procédé d'orchestration de microservices, comprenant les faits suivants :
établir (101), pour chacun d'une pluralité de microservices, un premier nœud dans un premier moteur d'exécution, dans lequel le premier nœud est configuré pour commander l'exécution d'un microservice ;
recevoir (102) un arbre de comportement dont la construction a été réalisée par un utilisateur, dans lequel l'arbre de comportement comprend un nœud feuille, et le nœud feuille comprend un nom ou un identifiant du microservice ;
analyser (103) l'arbre de comportement et mapper le nœud feuille sur le premier nœud ; et
générer (104) une instance de l'arbre de comportement par le biais du premier moteur d'exécution qui est configuré pour déployer une logique de commande dans l'arbre de comportement jusqu'à un dispositif cible ;
dans lequel, avant le fait de générer (104) une instance de l'arbre de comportement, le procédé comprend en outre les faits suivants :
connecter au moins un sous-arbre de comportement à l'arbre de comportement ;
réaliser un déploiement distribué sur un second moteur d'exécution connecté à l'au moins un sous-arbre de comportement et sur le premier moteur d'exécution connecté à l'arbre de comportement ;
connecter le premier moteur d'exécution au second moteur d'exécution de telle sorte que le premier moteur d'exécution commande l'exécution du second moteur d'exécution ; et
établir, pour chacun de tous les nœuds de comportement dans un sous-arbre de comportement de l'au moins un sous-arbre de comportement, un second nœud correspondant dans le second moteur d'exécution, dans lequel le nœud de comportement définit une opération d'un dispositif de technologie opérationnelle, Operational Technology OT, de telle sorte qu'un dispositif OT correspondant est commandé par le biais du second nœud lorsque le nœud de comportement dans le sous-arbre de comportement est coché.

2. Procédé selon la revendication 1, dans lequel le premier nœud communique avec le microservice correspondant par le biais d'une interface de programmation d'application, Application Programming Interface, API, RESTful ou d'une API d'appel de procédure à distance, Remote Procedure Call RPC.

3. Procédé selon la revendication 1, dans lequel, après le fait de recevoir (102) une construction réalisée par un utilisateur sur un arbre de comportement, le procédé comprend en outre :
le fait de configurer le nœud feuille de telle sorte que l'exécution du microservice correspondant est commandée par le biais du premier nœud selon la configuration lorsque le nœud feuille est coché.

4. Procédé selon la revendication 1, dans lequel, après le fait d'établir un second nœud correspondant dans le second moteur d'exécution, le procédé comprend en outre :
le fait de connecter au moins un second nœud au microservice dans le second moteur d'exécution, de telle sorte que le second nœud commande l'exécution du microservice.

5. Procédé selon la revendication 1, dans lequel le fait de connecter au moins un sous-arbre de comportement à l'arbre de comportement comprend les faits suivants :
déterminer un nœud feuille à partir de l'arbre de comportement, dans lequel le nœud feuille est configuré pour commander l'exécution d'un sous-arbre de comportement ; et
connecter un nœud racine de chacun de l'au moins un sous-arbre de comportement à un nœud feuille correspondant dans l'arbre de comportement.

6. Procédé selon la revendication 5, dans lequel le fait de connecter un nœud racine de chacun de l'au moins un sous-arbre de comportement à un nœud feuille correspondant dans l'arbre de comportement comprend :
le fait d'amener le nœud racine de chacun de l'au moins un sous-arbre de comportement à communiquer avec le nœud feuille correspondant dans l'arbre de comportement par le biais d'une API RESTful ou d'une API RPC.

7. Dispositif électronique d'orchestration de microservices, comprenant un processeur (401) et une mémoire (402), dans lequel la mémoire (402) stocke des instructions lisibles par ordinateur, et les instructions lisibles par ordinateur, lorsqu'elles sont exécutées par le processeur (401), mettent en œuvre le procédé selon de quelconques des revendications 1 à 6.

8. Support de stockage lisible par ordinateur, stockant des instructions lisibles par ordinateur, dans lequel les instructions lisibles par ordinateur, lorsqu'elles sont exécutées, réalisent le procédé selon de quelconques des revendications 1 à 6.
